# EUROPÄISCHE PATENTANMELDUNG

(11) **EP 1 044 762 A2**
(43) Veröffentlichungstag der Anmeldung: **18.10.2000**
(21) Anmeldenummer: 00105826.2
(22) Anmeldetag: 20.03.2000
(51) Int. Cl.: B23Q 11/00

(54) **Verfahren zum Abführen von Zerspanungsprodukten eines zerspanenden Bearbeitungsverfahrens**

(30) Priorität: 07.04.1999 DE 19915619
(71) Anmelder: MULTIMATIC Oberflächentechnik GmbH & Co., 49176 Hilter (DE)
(72) Erfinder: Dr.-Ing. Jäger, Walter B., 49176 Hilter a.T.W. (DE)
(74) Vertreter: Bremer, Ulrich, Dipl.-Phys.

(57) **Zusammenfassung**

Die Erfindung bezieht sich auf ein Verfahren zur Abführung von Zerspanungsprodukten eines zerspanenden Bearbeitungsverfahren sowie ein Bearbeitungsverfahrens.

Um mit relativ geringem Aufwand und geringen Kosten eine gute Abführung von Zerspanungsprodukten zu erreichen, wird vorgeschlagen, daß feste CO₂-Teilchen (2) einem Gasstrom (5) zugeführt werden, der Gasstrom mit aufgenommenen festen CO₂-Teilchen einem Bearbeitungsraum zugeführt wird, in dem das Bearbeitungsverfahren durchgeführt wird, und auf einen Bereich in dem Bearbeitungsraum gerichtet wird, in dem ein Werkstück (7) von einem Werkzeug (6) zerspanend bearbeitet wird.

## Beschreibung

Die Erfindung bezieht sich auf ein Verfahren zum Abführen von Zerspanungsprodukten eines zerspanenden Bearbeitungsverfahrens sowie ein zerspanendes Bearbeitungsverfahren, bei dem ein Werkstück von einem Werkzeug unter Erzeugung von Zerspanungsprodukten bearbeitet wird und die Zerspanungsprodukte abgeführt werden.

Bei zerspanenden Bearbeitungsverfahren, wie z. B. Dreh-, Fräs-, oder Bohrverfahren, wird ein Werkstück bzw. zu zerspanendes Produkt von einem Werkzeug in einer Werkzeugmaschine bearbeitet. Neben der Kühlung von Werkstück und Werkzeug sowie einer Schmierung der Schnittfläche ist es im allgemeinen notwendig, die anfallenden Zerspanungsprodukte, insbesondere Späne und Staub, abzuführen, damit diese sich nicht an der Werkzeugmaschine oder in dem Bearbeitungsraum festsetzen.

Hierzu kann zum einen eine Kühlmittelschmierung vorgenommen werden, bei der große Flüssigkeitsmengen auf die Schnittfläche gerichtet werden und hierdurch zum einen Werkstück und Werkzeug abkühlen und zum anderen die Schmierung bewirken. Somit kann zwar im allgemeinen eine gute Kühlung und Schmierung erreicht werden, es fallen jedoch große, mit den Zerspanungsprodukten versetzte Flüssigkeitsmengen an, die nachfolgend wiederum abgeführt werden müssen. Zur Aufbereitung müssen diesen angefallenen Flüssigkeitsmengen zunächst die Zerspanungsprodukte entzogen werden und nachfolgend von Flüssigkeitsresten gereinigt werden, so daß sie anschließend wiederum weiterverwendet, z. B. eingeschmolzen werden können. Dementsprechen ist eine aufwendige und kostenträchtige Zu- und Abführung des Kühlschmiermittels sowie eine Wiederaufbereitung von Kühlmittel und Zerspanungsprodukten notwendig. Weiterhin können sich mit Zerspanungsprodukten versetzte Flüssigkeitströpfchen in dem Bearbeitungsraum, z. B. an der Werkzeugmaschine, festsetzen, so daß im allgemeinen nach einer längeren Betriebsdauer eine umfassende Reinigung derselben notwendig ist. Weiterhin ist im allgemeinen der Arbeitsplatz trotz einer geschlossenen Bearbeitungsmaschine stark verölt, so daß ggf. auch eine Belastung des Bedienungspersonals erfolgen kann.

Es sind weiterhin Bearbeitungsverfahren mit Minimalmengenschmierungen bekannt, bei denen relativ kleine Mengen Schmiermittel direkt der Schnittfläche zugeführt werden, insbesondere über das Werkzeug. Bei diesen Verfahren fehlt der Kühlschmiermittelstrom, so daß die Zerspanungsprodukte nur durch die Schwerkraft abgeführt werden und zu einer Abführeinrichtung, d.h. einem Späneförderer gelangen. Daher können sich Späne und Stäube mit kleinen Mengen Schmiermittel überall innerhalb der Maschine ablagern, so daß im laufe einer Tagesproduktion dicke Schichten von Verunreinigungen abgereinigt werden müssen. Hierzu sind entsprechende Produktionspausen und zum Teil manuelle Reinigungen unter großem Aufwand nötig. Weiterhin kann durch die Minimalmengenschmierung die Temperaturentwicklung nicht beeinflußt werden, so daß ggf. Überhitzungsprobleme auftreten können.

Die DE 43 26 517 A1 zeigt ein Verfahren zur spanenden Bearbeitung von metallischen Werkstücken mit Kühlung, bei dem flüssiges CO₂ aus einer Düse austritt und sich entspannt, wodurch sich ein Gemisch aus gasförmigem, kalten Kohlendioxid und Trockenschnee bildet, das auf eine Bearbeitungsstelle einer spanenden Bearbeitung eines metallischen Werkstückes gerichtet wird. Hierdurch wird eine gewünschte Kühlung der Bearbeitungsstelle erreicht.

Die Erfindung liegt die Aufgabe zugrunde, gegenüber dem Stand der Technik Verbesserungen zu schaffen und insbesondere ein Verfahren zum Abführen von Zerspanungsprodukten und ein zerspanendes Bearbeitungsverfahren zu schaffen, mit denen bei relativ geringem Aufwand und geringen Kosten eine hohe Reinheit gewährleistet werden kann.

Diese Aufgabe wird bei einem Verfahren zum Abführen von Zerspanungsprodukten eines zerspanenden Bearbeitungsverfahrens gelöst, bei dem feste CO₂-Teilchen über eine Fördereinrichtung einem Gasstrom zugeführt werden der Gasstrom mit aufgenommenen festen CO₂-Teilchen einem Bearbeitungsraum zugeführt wird, in dem das Bearbeitungsverfahren durchgeführt wird, und auf einen Bereich in dem Bearbeitungsraum gerichtet wird, in dem ein Werkstück von einem Werkzeug zerspanend bearbeitet wird, und zumindest ein Großteil der erzeugten Zerspanungsprodukte von dem Gasstrom derartig erfaßt wird, dass die Zerspanungsprodukte von den CO₂-Teilchen getroffen werden.

Die Aufgabe wird weiterhin bei dem eingangs genannten zerspanenden Bearbeitungsverfahren gelöst, indem der Gasstrom mit aufgenommenen CO₂-Teilchen das Werkstück und das Werkzeug zumindest im Bereich der Schnittfläche erfaßt und weiterhin zumindest einen Großteil der erzeugten Zerspanungsprodukte von den CO₂-Teilchen getroffen werden, und ein Schmiermittel über das Werkzeug der Schnittfläche zugeführt wird.

Erfindungsgemäß werden somit die Zerspanungsprodukte, inbesondere Späne und Staub von Kohlendioxid-Teilchen bzw. Trockeneis-Teilchen eines Gasstroms getroffen. Bei diesem Zusammenstoß wird jnauf die festen Kohlendioxid-Teilchen entsprechend eine kinetischen Energie übertragen bzw. die kinetische Energie des Kohlendioxid-Teilchens wird beim Aufprall freigegeben. Da festes Kohlendioxid bzw. Trockeneis bei Energiezufuhr sofort sublimiert, d. h. in den gasförmigen Zustand übergeht, bleiben keine Verunreinigungen oder Restmengen eines Kühlmittels an den Zerspanungsprodukten zurück. Die Zerspanungsprodukte werden in ihrer Flugbahn durch den Zusammenstoß mit den CO₂-Teilchen gezielt beeinflußt und erhalten einen Stoß in die Flugrichtung des CO₂-Teilchens, das bei dem Aufprall sublimiert. Somit kann die Flugbahn der Zerspanungsprodukte in eine gewünschte Richtung, die in etwa der Richtung Gasstroms entspricht, gerichtet werden, so daß sie zu einer Abführeinrichtung, z. B. einen Späneförderer, gezielt abgelenkt werden.

Somit kann zum einen eine Verteilung der Zerspanungsprodukte über den Bearbeitungsraum zumindest weitgehend verhindert werden und zum anderen ein Abführung der Zerspanungsprodukte ohne eine Beimengung von z. B. Kühlschmiermittel oder anderen Flüssigkeiten erreicht werden, so daß nachfolgend eine relativ einfache und kostengünstige Wiederaufbereitung der Zerspanungsprodukte möglich ist. Weiterhin wird durch die Kohlendioxid-Teilchen, die auf das Werkzeug und Werkstück, z. B. auch im Bereich der Schnittfläche, treffen, eine Kühlung erreicht, so daß die weitere Verwendung zusätzlicher Kühlmittel unterbleiben kann. Somit wird der Einsatz eines Minimalmengenschmierverfahrens möglich, bei dem lediglich kleine Schmiermittelmengen der Schnittfäche zugeführt werden, ohne hierdurch einen wesentlichen Kühleffekt zu bewirken.

Erfindungsgemäß wird dabei auch erreicht, daß die zugeführten minimalen Schmiermittelmengen mit eventuell in ihnen haftenden Zerspanungsprodukten ebenfalls abgekühlt werden und mit dem Gasstrom mitgerissen werden, so daß sie nicht in dem Bearbeitungsraum verteilt werden.

Da die Zerspanungsprodukte durch das Auftreffen der Kohlendioxid-Teilchen abgekühlt werden, ist weiterhin die Gefahr verringert, daß diese Teilchen sich beim Auftreffen auf einen Gegenstand festbrennen.

Vorteilhafterweise kann die Kühlung von Werkzeug und Werkstück direkt durch die Steuerung der Menge zugeführter Kohlendioxid-Teilchen und/oder der Stärke des Gasstroms erreicht werden.

Die Steuerung der Menge zugeführter Kohlendioxid-Teilchen und/ oder der Stärke des Gasstroms kann vorteilhafterweise auch derartig eingestellt werden, dass ein Großteil der entstehenden Zerspanungsprodukte (im Flug) von den CO₂-Teilchen getroffen wird. Diese Einstellung kann vor dem jeweiligen Bearbeitungsverfahren oder auch während des Bearbeitungsverfahrens selbst vorgenommen werden.

Als Kohlendioxid-Teilchen können insbesondere Teilchen aus gepresstem Kohlendioxid-Schnee verwendet werden. Es kann Luft bzw. Gas mit einem Druck von z. B. 2 bis 7 bar verwendet werden.

Gegenüber dem Verfahren der DE 43 26 517 A1, bei der nur eine Kühlung des bearbeiteten Bereichs der Werkstücks erreicht wird, werden erfindungsgemäß die Zerspanungsprodukte nach ihrer Entstehung, d. h. im Flug, von den CO₂-Teilchen getroffen. Dies kann insbesondere mit CO₂-Teilchen aus gepresstem CO₂-Schnee geschehen, die bei dem Verfahren der DE 43 26 517 A1 nicht hergestellt werden können. Weiterhin ist bei diesem Verfahren nach dem Stand der Technik keine Variation der Stärke des Gasstroms unäbhängig von der Zufuhrmenge von CO₂-Teilchen möglich, um eine Einstellung derartig zu erreichen, dass ein Großteil der entstehenden Zerspanungsprodukte abgefangen wird.

Erfindungsgemäß ist insbesondere die zerspanende Bearbeitung von Materialien mögich, bei denen explosive Stäube entstehen. Zu diesen Materialien gehören insbesondere Aluminium und Magnesium sowie deren Legierungen. Durch das Auftreten der Kohlendioxid-Teilchen auf die erzeugten Späne und Staubteilchen wird zum einem eine direkte Explosionsgefahr verringert. Weiterhin kann für den Gasstrom ein Inertgas, wie z. B. Stickstoff verwendet werden, so daß die erzeugten Zerspanungsprodukte lediglich mit diesem Inertgas sowie gasförmigen Kohlendioxid, das aus den Kohlendioxid-Teilchen entstanden ist, in Kontakt kommen. Für die Bearbeitung von Materialien, bei denen keine hochexplosiven Teilchen entstehen, ist im allgemeinen der Einsatz von Druckluft kostengünstiger.

Die Abführung der Zerspanungsprodukte durch z. B. einen Späneförderer oder eine Absaugeinrichtung allein kann durch eine aktive Absaugung des Gasstroms sowie des erzeugten gasförmigen Kohlendioxids verbessert werden, da durch die Absaugung der Strom der Zerspanungsprodukte besser ausgerichtet werden kann.

Das Werkstück kann nach Fertigstellung sofort gereinigt werden, indem das Werkzeug entfernt wird und das Werkstück in dem Gasstrom mit CO 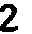 -Teilchen von Spanresten und Fett bzw. Schmiermittel gereinigt wird, wobei es vorteilhafterweise im dem Gasstrom gewendet wird.

Die Werkzeugmaschine und der Bearbeitungsraum können vor, nach oder während der Bearbeitung ebenfalls durch den Gasstrom mit CO₂-Teilchen gereinigt werden.

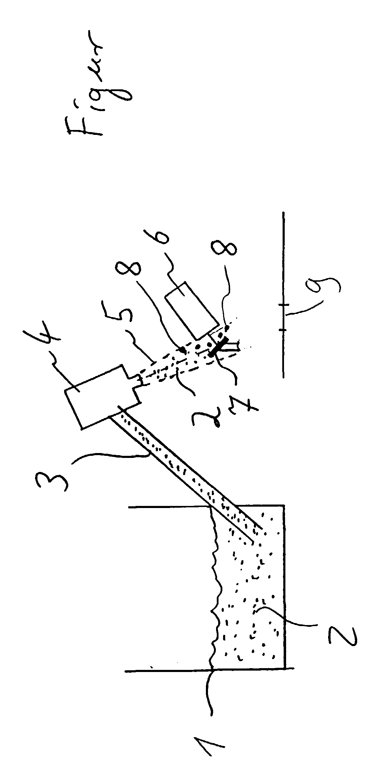

Die Erfindung wird im folgenden anhang der beiliegenden Zeichnung an einer Ausführungsform näher erläutert. Die Figur zeigt die Anwendung eines erfindungsgemäßen Verfahrens bei einer Werkzeugmaschine.

Aus einem Sammelbehälter 1 mit festen Kohlendioxid-Teilchen 2 werden über eine Förderschnecke 3 Kohlendioxid-Teilchen 2 vereinzelt und einer Venturidüse 4 zugeführt. In der Venturidüse 4 werden die Kohlendioxid-Teilchen 2 von einem erzeugten Gasstrom 5 aufgenommen. Der Gasstrom 5 mit aufgenommenen Kohlendioxid-Teilchen 2 ist auf einen Bereich gerichtet, in dem ein Werkzeug 6, z.B. eine Spindel mit Bohreinsatz, ein Werkstück 7 bearbeitet. Das Werkzeug kann weiterhin eine Drehmaschine oder Fräsmaschine bzw. allgemein ein Bearbeitungszentrum sein. Bei der zerspanenden Bearbeitung entstehen in bekannter Weise Zerspanungsprodukte-Teilchen 8 d. h. Späne und Staubteilchen. Da die Zerspanungsprodukte in dem von den Werkstück 5 erfaßten Bereich erzeugt werden, werden sie weit überwiegend von CO₂-Teilchen 2 getroffen. Bei diesem Auftreffen wird die kinetische Energie der CO₂-Teilchen und ggf. der Zerspanungsprodukt-Teilchen beim Abbremsen frei. Diese freiwerdende kinetische Energie führt zu einem Verdampfen bzw. Sublimieren der festen Kohlendioxid-Teilchen zu gasförmigen Kohlendioxid. Hierbei entzieht das verdampfende Teilchen der Umgebung Wärme, wodurch insbesondere das Zerspanungsprodukt-Teilchen 8 abgekühlt wird. Somit werden diese Zerspanungsprodukt-Teilchen 8 durch den Stoß mit den CO₂-Teilchen 2 abgebremst bzw. in die Flugrichtung der CO₂-Teilchen 2 und des Gasstroms 5 gerichtet. Die Teilchen 8 werden dabei nachfolgend weiter von dem Gasstrom 5 mitgetragen, der zu einer Absaugeinrichtung 9 gelangt. Durch die Verwendung der Absaugeinrichtung kann der Gasstrom von der Venturidüse 4 bis zu dieser Absaugeinrichtung aufrechterhalten werden, so daß ein Verteilen der Teilchen 8 in dem Bearbeitungsraum hierdurch weiter eingeschränkt wird. Bei der Absaugeinrichtung 9 kann z. B. ein Späneförderer vorgesehen werden, der die erzeugten Zerspanungsprodukte fortlaufend abtransportiert.

Die Schnittfläche des Werkstücks 7, an dem dieses von dem Werkzeug 6 bearbeitet wird, wird durch eine Minimalmengenschmierung, die vorteilhafterweise über das Werkzeug 6 durchgeführt wird, geschmiert. Da der Gasstrom mit Kohlendioxid-Teilchen zu einer Abkühlung von Werkzeug und Werkstück, insbesondere auch der Schnittfläche führt, ist die Verwendung weiterer Kühlmittel nicht notwendig.

Grundsätzlich kann ein Temperatursensor z. B. am Werkzeug vorgesehen werden, bei dessen übermäßiger Erhitzung die Kühlwirkung verstärkt werden kann, indem entweder der Gasstrom erhöht wird oder die von der Förderschnecke 3 geförderte Teilchenmenge erhöht wird.

Die Stärke des Gasstroms kann z. B. über eine Einstellung des Drucks der verwendeten Druckluft bzw. unter Druck stehenden Stickstoff vorgenommen werden.

Die CO₂-Teilchen sind z.B. länglich und haben z.B. eine Länge von einigen Millimetern und einen Durchmesser von 0,5 - 2 mm.

## Patentansprüche

1. Verfahren zum Abführen von Zerspanungsprodukten eines zerspanenden Bearbeitungsverfahrens, bei dem feste CO₂-Teilchen (2) über eine Fördereinrichtung (3) einem Gasstrom (5) zugeführt werden,
der Gasstrom mit aufgenommenen festen CO₂-Teilchen (2) einem Bearbeitungsraum zugeführt wird, in dem das Bearbeitungsverfahren durchgeführt wird, und auf einen Bereich in dem Bearbeitungsraum gerichtet wird, in dem ein Werkstück (7) von einem Werkzeug (6) zerspanend bearbeitet wird, und
zumindest ein Großteil der erzeugten Zerspanungsprodukte (8) von dem Gasstrom derartig erfaßt wird, dass die Zerspanungsprodukte von den CO₂-Teilchen getroffen werden.

2. Verfahren nach Anspruch 1, **dadurch gekennzeichnet, daß** die CO₂-Teilchen (2) über die Fördereinrichtung, vorzugsweise eine Förderschnecke (3), vereinzelt und nachfolgend einer Venturidüse (4) zugeführt werden, in der sie von dem Gasstrom (5) erfaßt werden.

3. Verfahren nach Anspruch 1 oder 2, **dadurch gekennzeichnet, daß** ein Gasstrom (5) aus Druckluft oder unter Druck stehendem Stickstoff verwendet wird.

4. Verfahren nach einem der Ansprüche 1 bis 3, **dadurch gekennzeichnet, dass** die Zufuhrmenge von CO₂-Teilchen und/oder der Gasstrom variiert werden.

5. Verfahren nach Anspruch 4, **dadurch gekennzeichnet, dass** die Zufuhrmenge von CO₂-Teilchen und/oder der Gasstrom derartig eingestellt werden, dass ein Großteil der erzeugten Zerspanungsprodukte von den CO₂-Teilchen getroffen wird.

6. Verfahren nach einem der Ansprüche 1 bis 5, **dadurch gekennzeichnet, daß** der Gasstrom und gasförmiges CO₂ aus dem Bearbeitungsraum abgesaugt werden, vorzugsweise durch eine Absaugung unterhalb des Bereichs des Werkstücks (7) und Werkzeugs (6), wobei insbesondere gleichzeitig Zerspanungsprodukte abtransportiert werden.

7. Verfahren nach einem der Ansprüche 1 bis 6, **dadurch gekennzeichnet, dass** die CO₂-Teilchen aus gepresstem CO₂-Schnee bestehen.

8. Zerspanendes Bearbeitungsverfahren, bei dem ein Werkstück von einem Werkzeug (6) unter Erzeugung von Zerspanungsprodukten (8), insbesondere Spänen oder Staub, bearbeitet wird und die Zerspanungsprodukte abgeführt werden, **dadurch gekennzeichnet, daß** ein Verfahren zum Abführen der Zerspanungsprodukte nach einem der Ansprüche 1 bis 7 angewendet wird, wobei der Gasstrom mit aufgenommenen CO₂-Teilchen das Werkstück und das Werkzeug zumindest im Bereich der Schnittfläche erfaßt und weiterhin zumindest einen Großteil der erzeugten Zerspanungsprodukte von den CO₂-Teilchen getroffen werden, und ein Schmiermittel über das Werkzeug der Schnittfläche zugeführt wird.

9. Bearbeitungsverfahren nach Anspruch 8, **dadurch gekennzeichnet, daß** eine Minimalmengenschmierung vorgenommen wird und eine Kühlung von Werkzeug und Werkstück durch Variation des Gasstroms und/oder der Menge von zugeführten CO₂-Teilchen eingestellt wird.

10. Bearbeitungsverfahren nach Anspruch 8 oder 9, **dadurch gekennzeichnet, daß** ein Werkstück aus Aluminium oder Magnesium bzw. einer Aluminium- oder Magnesiumlegierung bearbeitet wird, wobei vorteilhafterweise ein Inertgas wie z.B. Stickstoff für den Gasstrom verwendet wird.

11. Berarbeitungsverfahren nach einem der Ansprüche 8 bis 10, **dadurch gekennzeichnet, daß** es ein Dreh-, Fräs-, Hohn- oder Bohrverfahren ist.

12. Bearbeitungsverfahren nach einem der Ansprüche 8 bis 11, **dadurch gekennzeichnet, daß** nach Fertigstellung des Werkstücks dieses durch den Gasstrom mit CO₂-Teilchen gereinigt wird, wobei das Werkstück vorzugsweise gewendet wird.

13. Bearbeitungsverfahren nach einem der Ansprüche 8 bis 12, **dadurch gekennzeichnet, daß** während der Bearbeitung des Werkstücks oder vor oder nach Fertigstellung des Werkstücks die Werkzeugmaschine und vorteilhafterweise auch der Bearbeitungsraum durch den Gasstrom mit CO₂-Teilchen gesäubert wird.
